# EUROPÄISCHE PATENTANMELDUNG

(11) **EP 0 601 280 A1**
(43) Veröffentlichungstag der Anmeldung: **15.06.1994**
(21) Anmeldenummer: 93113300.3
(22) Anmeldetag: 20.08.1993
(51) Int. Cl.: A47K 3/02, A47K 1/04, B29C 39/12, E03C 1/18

(54) **Einrichtungsgegenstand für eine Küche oder ein Bad o.dgl.**

(30) Priorität: 09.10.1992 DE 4234046
(71) Anmelder: DEUTSCHE VORTEX GmbH, D-71642 Ludwigsburg (DE)
(72) Erfinder: Schmidt, Hans-Dieter, D-71686 Remseck (DE)
(74) Vertreter: Wilhelm & Dauster Patentanwälte European Patent Attorneys

(57) **Zusammenfassung**

Ein Einrichtungsgegenstand für eine Küche oder ein Bad o.dgl., insbesondere ein Waschbecken oder eine Wanne, wird aus zwei Schalen (1,2) zusammengefügt, die zwischen sich einen mit farbigem Medium befüllbaren Zwischenraum (3) belassen. Wenigstens die den sichtbaren Bereich des Gegenstandes bildende Schale (1,2) besteht aus transparentem Material. Es ist somit möglich, die Farbgebung dieses Gegenstandes nach seiner Herstellung frei zu wählen und an den Wunsch eines Kunden anzupassen.

## Beschreibung

Die Erfindung betrifft einen Einrichtungsgegenstand für eine Küche oder ein Bad o.dgl., bei welchem wenigstens der nach einem Einbau sichtbare Bereich farbig ist.

Derartige Einrichtungsgegenstände, wie insbesondere Waschbecken oder Wannen o.dsgl., unterscheiden sich nicht nur durch die Form, sondern auch durch die Farbe. Ein Hersteller derartiger Gegenstände muß seinen Produktionsprozeß so auslegen, daß er diese Gegenstände in den unterschiedlichsten, jeweils gewünschten Farben durchführen kann. Diese Farben unterliegen einem Modetrend. Der Hersteller muß die Gegenstände in den im Trend liegenden, wichtigsten Farben vorproduzieren, um schnell lieferbereit zu sein. In ähnlicher Weise müssen Großhändler diese Gegenstände in den jeweils im Modetrend liegenden Farben vorrätig haben, d.h. auf Lager halten.

Der Erfindung liegt die Aufgabe zugrunde, Einrichtungsgegenstände der eingangs genannten Art zu schaffen, die sich wirtschaftlicher als bisher herstellen lassen.

Diese Aufgabe wird dadurch gelöst, daß der Gegenstand aus zwei Schalen zusammengefügt ist, die zwischen sich einen mit farbigem Medium befüllbaren Zwischenraum belassen, und daß wenigstens die den sichtbaren Bereich bildende Schale aus transparentem Material besteht.

Die Erfindung geht von der Erkenntnis aus, daß zwar die doppelwandige Herstellung der Einrichtungsgegenstände teurer als die bisherige einwandige Herstellung ist, daß jedoch dieser erhöhte Aufwand durch die Vorteile mehr als wettgemacht wird. Diese Vorteile bestehen darin, daß die Farbgebung erst nach der Herstellung unmittelbar bei einem Verkauf eines derartigen Gegenstandes erfolgen kann, indem erst dann das farbige Medium in den Zwischenraum eingefüllt wird. Der Hersteller braucht in diesem Fall die Einrichtungsgegenstände nicht in verschiedenen Farben vorzuproduzieren, so daß der Fertigungsprozeß vereinfacht wird. Ebenso braucht ein Großhändler die betreffenden Gegenstände nicht in unterschiedlichen Farben auf Lager zu halten, was dann zu erheblichen Ertragseinbußen führt, wenn sich der Modetrend ändert und eine der Farben nicht mehr aktuell ist. Ein derartiges Ereignis führte bisher zu erheblichen Ertragseinbußen beim Hersteller und auch beim Großhändler, da Gegenstände mit nicht mehr aktuellen Farben sich nur noch zu wesentlich reduzierten Preisen absetzen lassen. Ein besonderer Vorteil besteht darin, daß die Farbgebung ganz auf den individuellen Wunsch des Käufers abgestellt werden kann, der damit nicht an Modefarben gebunden ist.

In Ausgestaltung der Erfindung wird vorgesehen, daß die beiden Schalen im wesentlichen kongruente Formen besitzen und zwischen sich einen spaltförmigen Zwischenraum belassen. Damit läßt sich der Bedarf an farbigem Medium, das einzufüllen ist, gering halten.

In weiterer Ausgestaltung der Erfindung wird vorgesehen, daß der spaltförmige Zwischenraum mit einem oder mehreren Abschnitten unterschiedlicher Spaltweiten versehen ist. Damit lassen sich besondere Farbeffekte erzielen.

In weiterer Ausgestaltung der Erfindung wird vorgesehen, daß der Zwischenraum zur Aufnahme eines flüssigen Mediums bis auf eine verschließbare Einfüllöffnung abgedichtet ist. Ein derartiges flüssiges Medium erlaubt eine gewisse Kraftübertragung zwischen den beiden Schalen, so daß nicht eine der Schalen alleine die benötigte Festigkeit aufbringen muß.

In weiterer Ausgestaltung der Erfindung wird vorgesehen, daß an den Zwischenraum eine verschließbare Ablaßöffnung angeschlossen ist. Damit wird die Möglichkeit eröffnet, daß der betreffende Einrichtungsgegenstand auch nach seinem Einbau noch nachträglich bezüglich seiner Farbe geändert werden kann, indem die zunächst vorhandene farbige Flüssigkeit abgelassen und durch eine Flüssigkeit mit einer anderen Farbe ersetzt wird.

In weiterer Ausgestaltung der Erfindung wird vorgesehen, daß in den Zwischenraum ein mit Farbstoff versehenes, aushärtendes Zweikomponentensystem eines Kunststoffes eingefüllt ist. Dieser aushärtende Kunststoff erhöht die Steifigkeit des gesamten Gegenstandes, so daß insbesondere die äußere, Belastungen ausgesetzte Schale relativ dünnwandig ausgebildet werden kann.

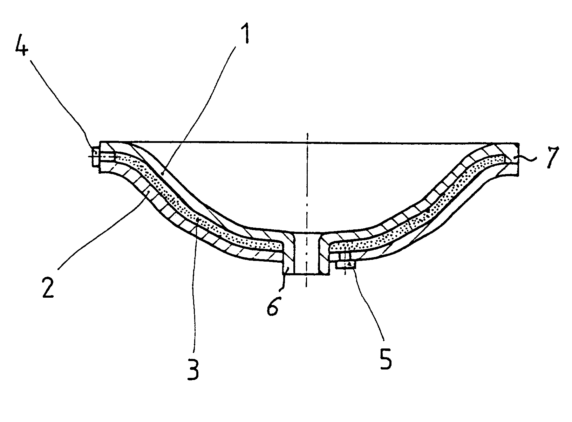

Weitere Merkmale und Vorteile der Erfindung ergeben sich aus der nachfolgenden Beschreibung der in der Zeichnung dargestellten Ausführungsform.

Die Zeichnung zeigt einen Querschnitt durch ein erfindungsgemäßes Waschbecken.

Das dargestellte Waschbecken ist aus zwei Schalen (1, 2) zusammengesetzt, die im wesentlichen eine kongruente Form aufweisen. Die beiden Schalen (1, 2) sind so zusammengefügt, daß sie zwischen sich einen spaltförmigen Zwischenraum (3) belassen. Die innere Schale (1) ist mit einem Abflußstutzen (6) versehen. Außerdem weist die innere Schale (1) an ihrem Rand einen umlaufenden Wulst (7) auf, dessen Höhe dem spaltförmigen Zwischenraum (3) entspricht. Die äußere oder untere Schale (2) wird von dem Abflußstutzen (6) durchdrungen.

Die beiden Schalen (1, 2) sind im Bereich des Randwulstes (7) und des Abflußstutzens (6) dicht miteinander verbunden, beispielsweise verklebt oder verschweißt. Die beiden Schalen (1, 2) sind aus einem transparenten Material hergestellt, das milchig durchsichtig oder glasklar sein kann. Hierfür eignen sich verschiedene Kunststoffe oder auch schlagzähes Glas. An der höchsten und der tiefsten Stelle sind zu dem Zwischenraum (3) führende Öffnungen vorgesehen, die mit Verschlußstopfen (4, 5) verschlossen sind, beispielsweise Verschlußschrauben.

Der Zwischenraum (3) zwischen den beiden Schalen (1, 2) kann mit Medien in beliebigen Farben befüllt werden, so daß das im Aufbau und Herstellung gleiche Waschbecken entsprechend dem Kundenwunsch nachträglich eingefärbt werden kann.Darüber hinaus ist es auch möglich, die Farbgebung auch nachträglich, nach Einbau des Waschbeckens zu ändern, indem der Verschluß (5) am tiefsten Punkt neben dem Abflußstutzen (6) geöffnet und das farbige Medium entleert wird. Danach kann der Zwischenraum (3) mit einem eine andere Farbe aufweisenden Medium befüllt werden. Zur Befüllung eignen sich insbesondere farbige Flüssigkeiten. Diese sollten so beschaffen sein, daß sich die Farbpartikel nicht absetzen und daß auch keine Diffusion in das Material der Schalen (1, 2) erfolgt.

Bei einer abgewandelten Ausführungsform wird vorgesehen, daß der spaltförmige Zwischenraum (3) einen oder mehrere Abschnitte oder Bereiche mit unterschiedlichen Spaltweiten aufweist. Dadurch ist es möglich, besondere Farbeffekte zu erzielen.

Wenn das Waschbecken so eingebaut wird, beispielsweise in einen tischartigen Einbau, daß die untere Schale (2) nachher nicht mehr sichtbar ist, so genügt es, die innere Schale (1), die den sichtbaren Bereich darstellt, aus transparentem Material herzustellen. Die nicht sichtbare Schale kann dann aus einem beliebigen Material bestehen, beispielsweise auch aus einem Blech. Dieses Blech muß dabei nicht aus einem hochwertigen, insbesondere rostfreien Material hergestellt werden, da es normalerweise nicht mit der in das Waschbecken einlaufenden Flüssigkeit in Berührung kommt. Es genügt deshalb ein relativ einfacher Werkstoff,der gegen Korrosion oberflächenbehandelt wird, beispielsweise einen Schutzanstrich erhält.

Bei einer abgewandelten Ausführungsform wird vorgesehen, daß der Zwischenraum (3) mit einem mit Farbstoff versehenen, aushärtenden Zwei-Komponenten-Systems eines Kunststoffes ausgefüllt wird. In diesem Falle ist die Farbgebung entsprechend dem Wunsch des Kunden bei oder nach dem Verkauf möglich, jedoch nachträglich nicht mehr änderbar. Diese Ausführungsform hat den Vorteil, daß dann das in dem Zwischenraum (3) eingefüllte Material die Steifigkeit des Gesamtgegenstandes erhöht, und insbesondere auch die Belastungen der inneren Schale (1) direkt aufnimmt und auf die äußere oder untere Schale (2) überträgt. Die innere Schale (1) kann dann mit einer deutlich verminderten Wandstärke hergestellt werden. Eine derartige Ausbildung eignet sich insbesondere für Wannen, beispielsweise Duschwannen oder Badewannen. In diesem Fall kann natürlich auch auf Verschlußstopfen (4 und 5) verzichtet werden.

Es soll nicht unerwähnt bleiben, daß selbstverständlich auch in den Zwischenraum (3) ein gasförmiges Medium eingefüllt werden kann, das eine besondere Farbe aufweist. Ein derartiges gasförmifes Medium kann sehr einfach eingefüllt und auch wieder abgelassen werden.

## Patentansprüche

1. Einrichtungsgegenstand für eine Küche oder ein Bad o.dgl., bei welchem wenigstens der nach einem Einbau sichtbare Bereich farbig ist, dadurch gekennzeichnet, daß der Gegenstand aus zwei Schalen (1, 2) zusammengefügt ist, die zwischen sich einen mit farbigem Medium befüllbaren Zwischenraum (3) belassen, und daß wenigstens die den sichtbaren Bereich bildende Schale (1) aus transparentem Material besteht.

2. Einrichtungsgegenstand nach Anspruch 1, dadurch gekennzeichnet, daß wenigstens die den sichtbaren Bereich bildende Schale (1) aus Kunststoff hergestellt ist.

3. Einrichtungsgegenstand nach Anspruch 1, dadurch gekennzeichnet, daß wenigstens die den sichtbaren Bereich bildende Schale (1) aus schlagzähem Glas hergestellt ist.

4. Einrichtungsgegenstand nach einem der Ansprüche 1 bis 3, dadurch gekennzeichnet, daß die beiden Schalen (1 und 2) im wesentlichen kongruente Formen besitzen und zwischen sich einen spaltförmigen Zwischenraum (3) belassen.

5. Einrichtungsgegenstand nach Anspruch 4, dadurch gekennzeichnet, daß der spaltförmige Zwischenraum (3) mit einem oder mehreren Abschnitten unterschiedlicher Spaltweiten versehen ist.

6. Einrichtungsgegenstand nach einem der Ansprüche 1 bis 5, dadurch gekennzeichnet, daß der Zwischenraum (3) zur Aufnahme eines flüssigen Mediums bis auf eine verschließbare Einfüllöffnung (4, 5) abgedichtet ist.

7. Einrichtungsgegenstand nach einem der Ansprüche 1 bis 6, dadurch gekennzeichnet, daß an den Zwischenraum (3) eine verschließbare Ablaßöffnung (5) angeschlossen ist.

8. Einrichtungsgegenstand nach einem der Ansprüche 1 bis 5, dadurch gekennzeichnet, daß in den Zwischenraum (3) ein mit Farbstoff versehenes, aushärtendes Zwei-Komponenten-System eines Kunststoffes eingefüllt ist.
